(19) **Europäisches Patentamt**

**European Patent Office**

**Office européen des brevets**

(11) **EP 1 065 560 A1**

(12) **EUROPÄISCHE PATENTANMELDUNG**

(43) Veröffentlichungstag:
**03.01.2001 Patentblatt 2001/01**

(51) Int. Cl.$^7$: **G03B 21/13**, G03B 21/14,
G03B 21/28

(21) Anmeldenummer: **00250176.5**

(22) Anmeldetag: **07.06.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **02.07.1999 DE 19930753**

(71) Anmelder: **Optronik GmbH Potsdam**
**14482 Potsdam (DE)**

(72) Erfinder:
**Ristow, Jürgen, Dr.-Ing.**
**14473 Potsdam (DE)**

(74) Vertreter:
**Hengelhaupt, Jürgen D., Dipl.-Ing. et al**
**Gulde Hengelhaupt Ziebig,**
**Schützenstrasse 15-17**
**10117 Berlin (DE)**

(54) **Verfahren und Anordnung zur Projektion von Bildern unter spitzen Winkeln**

(57) Die Erfindung betrifft ein Verfahren und eine Anordnung zur unverzerrten Projektion von Bildern mittels einer Projektionseinrichtung auf eine Bildwand, wobei Bildwand und/oder Projektionseinrichtung schräg zueinander angeordnet sind.

Die Aufgabe der Erfindung, ein gattungsgemäßes Verfahren und eine Anordnung zu entwickeln, mit denen gewährleistet ist, daß die Nachteile des Standes der Technik vermieden werden und mit denen bei einer Schrägprojektion eine unverzerrte Wiedergabe der Bildvorlage auf der Bildwand auch bei einer Neigung der Projektionswand und/oder der Projektionseinrichtung gewährleistet sind, wird dadurch gelöst, daß das durch die Projektionseinrichtung 3 auf die Bildwand 2,2' zu projizierende Bild 1 aus einer Bildvorlage hergestellt wird, indem die normalerweise im Zentrum der Bildvorlage liegende optische Achse OA im zu projizierenden Bild 1 um einen definierten Betrag E aus dem Mittelpunkt verschoben wird, wobei zur Verschiebung der optischen Achse OA aus dem Bildmittelpunkt um den definierten Betrag E das durch die Projektionseinrichtung 3 auf die Bildwand 2,2' zu projizierende Bild 1 um einen Verzerrungswinkel $\gamma$ definiert so vorverzerrt und zur optischen Achse OA mit der Bildwand 2,2' unter einem definierten Bildneigungswinkel $\beta$ so geneigt angeordnet wird, daß die Bildwand 2,2' zur optischen Achse OA einen Neigungswinkel $\alpha$ bildet, der zusammen mit dem Bildneigungswinkel $\beta$ zu dem Verzerrungswinkel $\gamma$ in einem festen Verhältnis steht.

Fig. 2

EP 1 065 560 A1

**Beschreibung**

Die Erfindung betrifft ein Verfahren und eine Anordnung zur unverzerrten Projektion von Bildern mittels einer Projektionseinrichtung auf eine Bildwand, wobei Bildwand und/oder Projektionseinrichtung schräg zueinander angeordnet sind, gemäß den Oberbegriffen der Ansprüche 1 und 5.

Projektionseinrichtungen, die senkrecht zur optischen Achse des Projektionsgerätes auf die Bildwand projizieren, sind allgemein bekannt. Es sind dies Kinoprojektoren, Diaprojektoren, Videoprojektoren oder andere Geräte, die vielfältig beschrieben wurden.

Ein gravierender Mangel derartiger Projektionen besteht darin, daß bei einer Neigung des Projektionsgerätes zur Bildwand perspektivische Verzerrungen auftreten, die den Bildeindruck sehr nachteilig beeinflussen.

Andererseits sind Schrägprojektionen vornehmlich in kleinen Räumen sehr vorteilhaft, da sie platzsparend sind und/oder die Projektion nicht durch Gegenstände und/oder Personen, die sich im Strahlengang befinden, behindert wird.

Aus der sogenannten "Scheimpflug-Bedingung" ist es bekannt, Unschärfen in den Randzonen eines Bildes, die durch eine Schrägstellung des Projektors und/oder der Bildwand entstehen, zu verbessern, indem das zu projizierende Bild entgegengesetzt geneigt wird (Lexikon der Optik, Verlag Werner Dausien, Hanau 1988, Seite 312). Es ist jedoch kein Verfahren bekannt, mit dem die perspektivische Verzerrung des projizierten Bildes auf der Bildwand beseitigt werden kann.

Aufgabe der Erfindung ist es, ein gattungsgemäßes Verfahren und eine Anordnung zu entwickeln, mit denen gewährleistet ist, daß die Nachteile des Standes der Technik vermieden werden und mit denen bei einer Schrägprojektion eine unverzerrte Wiedergabe der Bildvorlage auf der Bildwand auch bei einer Neigung der Projektionswand und/oder der Projektionseinrichtung gewährleistet sind.

Die Aufgabe der Erfindung wird durch ein Verfahren gemäß Anspruch 1 und eine Anordnung gemäß Anspruch 5 gelöst.

Das Verfahren ist dadurch gekennzeichnet, daß das durch die Projektionseinrichtung auf die Bildwand zu projizierende Bild aus einer Bildvorlage hergestellt wird, indem die normalerweise im Zentrum der Bildvorlage liegende optische Achse im zu projizierenden Bild um einen definierten Betrag aus dem Mittelpunkt verschoben wird, wobei zur Verschiebung der optischen Achse aus dem Bildmittelpunkt um den definierten Betrag das durch die Projektionseinrichtung auf die Bildwand zu projizierende Bild um einen Verzerrungswinkel definiert so vorverzerrt und zur optischen Achse mit der Bildwand unter einem definierten Bildneigungswinkel so geneigt angeordnet wird, daß die Bildwand zur optischen Achse einen Neigungswinkel bildet, der zusammen mit dem Bildneigungswinkel zu dem Verzerrungswinkel in einem festen Verhältnis steht.

Die Anordnung ist dadurch gekennzeichnet, daß die Projektionseinrichtung mit der Beleuchtungseinrichtung zur Bildwand unter einem Winkel $\beta$ zur optischen Achse geneigt angeordnet ist und das zu projizierende Bild so vorverzerrt ist, daß der Bildneigungswinkel $\beta$ und der Bildwandneigungswinkel $\alpha$ in einem festen Verhältnis zum Verzerrungswinkel $\gamma$ des zu projizierenden Bildes stehen.

Durch die Bearbeitung der Bildvorlage zu einem zu projizierenden Bild (Dia), bei der die Ausgangssituation zu einer definierten Verzerrung des Bildes (Dias) geführt wird, wird gewährleistet, daß eine verzerrungsfreie Wiedergabe bei einer Schrägprojektion erreicht wird. Nach dem erfindungsgemäßen Verfahren behandelte Bildvorlagen können verzerrungsfrei auf engstem Raum projiziert werden. Raumkanten, Wandvorsprünge oder Personen im Raum können unkompliziert umgangen werden. Es ergibt sich dadurch ein neues, breites Anwendungsspektrum für die Projektion von Bildvorlagen in der Werbung, zum Beispiel auf Messen, in Kaufhäusern, in Aufzügen, in Verkaufsräumen, aber auch zur Informationsvermittlung bei Vorträgen, Multi-Media-Veranstaltungen und dergleichen.

Die Erfindung wird nachfolgend anhand einer Zeichnung in einem Ausführungsbeispiel einer Anordnung zur Schrägprojektion näher erläutert. Es zeigen:

Fig. 1    eine prinzipielle Anordnung zur Projektion eines Bildes,

Fig. 2    die schematische Anordnung eines Projektors zu einer Bildwand mit den sich daraus ergebenden Strahlenverläufen,

Fig. 3    eine schematische Darstellung einer für die Projektion aufbereiteten Bildvorlage (Diapositiv) und

Fig. 4    eine schematische Darstellung einer Schrägprojektion mit einem Spiegel.

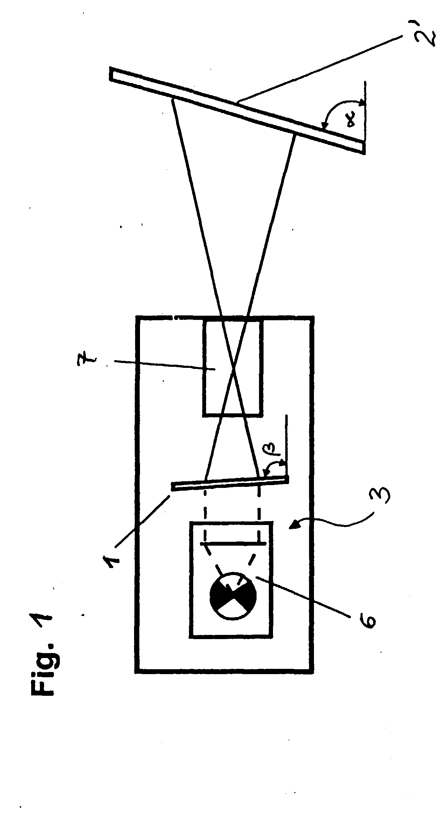

Die Fig. 1 zeigt in einer prinzipiellen Anordnung eine Projektionseinrichtung 3 mit einer Beleuchtungseinrichtung 6 und einer Abbildungsoptik 7, in die ein zu projizierendes Bild 1 unter einem Bildneigungswinkel $\beta$ eingebracht ist. Das Bild 1 soll auf eine unter einem Bildwandneigungswinkel $\alpha$ geneigte Bildwand 2' projiziert werden.

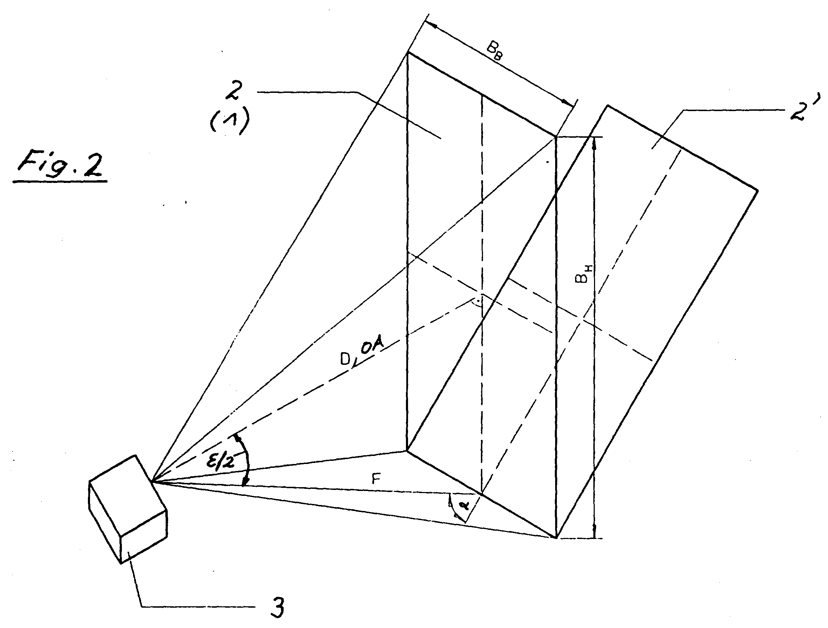

Die Fig. 2 zeigt in einer schematischen Darstellung die Ausgangssituation, welche besteht, wenn das Bild 1 aus Fig. 1 auf die gekippte Bildwand 2' anstelle auf eine zu dem Projektor 3 parallele Bildwand 2 projiziert werden soll (Schrägprojektion). Die Projektionseinrichtung 3 projiziert in diesem Fall nicht mehr senkrecht zur optischen Achse OA auf die Bildwand 2', sondern geneigt um den Winkel $\alpha$.

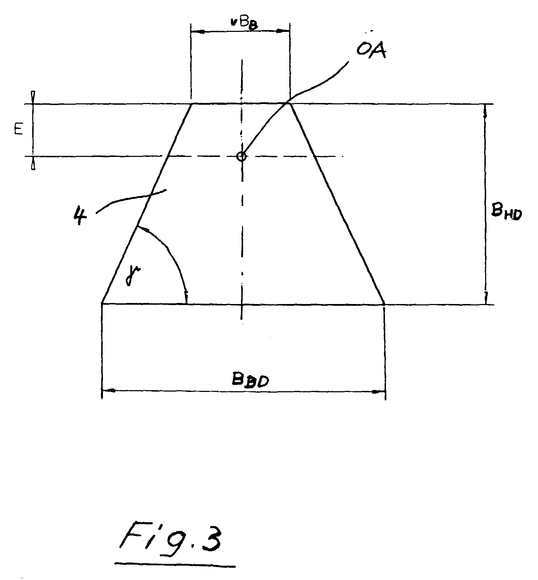

Durch die Schrägprojektion der Bildvorlage würden sich perspektivische Verzerrungen des projizierten Bildes ergeben, die nach der Erfindung dadurch ausgeglichen werden, daß aus der Bildvorlage ein Diapositiv 4 entsprechend Fig. 3 hergestellt wird, in welchem Vorverzerrungen realisiert sind, die bei einer Schrägprojektion des Dias 4 durch die mit der Vorverzerrung berücksichtigten räumlichen und technischen Gegebenheiten so ausgeglichen werden, daß eine unverzerrte Wiedergabe auf der Bildwand 2' gewährleistet ist.

Die Vorverzerrungen für das zu projizierende Bild (Dia 4) werden mit Hilfe eines Computers berechnet, indem mit den bekannten trigonometrischen Beziehungen die Strahllänge D aus der Brennweite f des verwendeten Objektivs des Projektors 3, aus der Bildbreite $B_B$ der Bildvorlage und der feststehenden unteren Bildbreite $B_{BD}$ des Dias 4 bestimmt wird (Fig. 2,3).

Aus der gegebenen Bildhöhe $B_H$ der Bildvorlage, der Strahllänge D und dem Aufstellwinkel bzw. Neigungswinkel $\alpha$ der Bildwand 2, 2' wird über die Beziehung

$$\frac{\text{Strahllänge D}}{\text{Bildhöhe } B_H} = \cos \varepsilon/2 \, (\sin \alpha \cot \varepsilon - \cos \alpha)$$

iterativ ein Winkel $\varepsilon$ (Fig. 2) bestimmt, mit dem die Bildhöhe $B_{HD}$, die verkürzte Bildbreite $vB_B$ des Dias 4, die Mittelpunktexzentrizität E auf dem Dia 4 und der Verzerrungswinkel $\gamma$ im Dia 4 bestimmt werden (Fig. 3).

Der Winkel $\varepsilon$ beschreibt dabei die aus den technischen Gegebenheiten resultierende Strahlöffnung der verwendeten Abbildungsoptik 7 (Projektor 3).

Es ergeben sich aus der Bildvorlage und den räumlichen Gegebenheiten sowie aus den technischen Daten des Projektors 3 die Daten für das unter dem vorgegebenen Winkel $\beta$ schräg zu projizierende Dia 4, wie es in der Fig. 3 dargestellt ist.

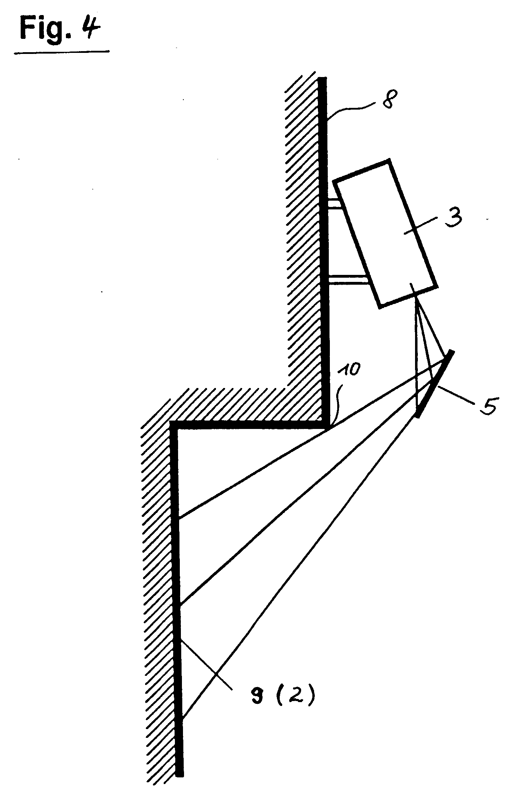

Auf diese Weise ist es möglich, die beispielsweise in der Fig. 4 gezeigte Projektion auf engem Raum und um eine Raumkante 10 herum zu realisieren, ohne Verzerrungen des projizierten Bildes zu bekommen.

Entsprechend der Darstellung in der Fig. 4 ist der Projektor 3 schräg auf eine Wand 8 montiert. Das Bild wird über einen Spiegel 5 auf eine als Bildwand 2 fungierende Wand 9 umgelenkt und projiziert. Es können Ecken umgangen und der Strahl am Betrachter vorbeigeführt werden. Wenn es die räumlichen Bedingungen zulassen, ist es ebenso möglich, auf den Spiegel 5 zu verzichten oder in besonderen Fällen, mehrere Spiegel 5 zu verwenden. Es entsteht ein unverzerrtes Bild trotz extrem schräg zur Bildwand 2 aufgestelltem Projektor 3.

Die Erfindung ist nicht auf das hier beschriebene Ausführungsbeispiel beschränkt. Vielmehr ist es möglich, durch Kombination und Modifikation der beschriebenen Merkmale weitere Ausführungsvarianten zu realisieren, ohne den Rahmen der Erfindung zu verlassen.

## Bezugszeichenliste

| | |
|---|---|
| 1 | Bild |
| 2 | Bildwand |
| 2' | geneigte Bildwand |
| 3 | Projektor |
| 4 | Dia |
| 5 | Spiegel |
| 6 | Beleuchtungseinrichtung |
| 7 | Abbildungsoptik |
| 8 | Wand |
| 9 | Wand |
| 10 | Raumkante |
| D | Strahllänge |
| OA | Optische Achse |
| E | Mittelpunktexzentrizität |
| $B_H$ | Bildhöhe der Bildvorlage |
| $B_B$ | Bildbreite der Bildvorlage |
| $B_{HD}$ | Bildhöhe des Dias |
| $vB_B$ | Bildbreite des Dias |
| $\alpha$ | Bildwandneigungswinkel |
| $\beta$ | Bildneigungswinkel |
| $\varepsilon$ | Strahlöffnung |
| $\gamma$ | Verzerrungswinkel Dia |

## Patentansprüche

1. Verfahren zur unverzerrten Projektion von Bildern mittels einer Projektionseinrichtung auf eine Bildwand, wobei Bildwand und/oder Projektionseinrichtung schräg zueinander angeordnet sind, **dadurch gekennzeichnet**, daß das durch die Projektionseinrichtung (3) auf die Bildwand (2,2') zu projizierende Bild (1) aus einer Bildvorlage hergestellt wird, indem die normalerweise im Zentrum der Bildvorlage liegende optische Achse (OA) im zu projizierenden Bild (1) um einen definierten Betrag (E) aus dem Mittelpunkt verschoben wird, wobei zur Verschiebung der optischen Achse (OA) aus dem Bildmittelpunkt um den definierten Betrag (E) das durch die Projektionseinrichtung (3) auf die Bildwand (2,2') zu projizierende Bild (1) um einen Verzerrungswinkel ($\gamma$) definiert so vorverzerrt und zur optischen Achse (OA) mit der Bildwand (2,2') unter einem definierten Bildneigungswinkel ($\beta$) so geneigt angeordnet wird, daß die Bildwand (2,2') zur optischen Achse (OA) einen Neigungswinkel ($\alpha$) bildet, der zusammen mit dem Bildneigungswinkel ($\beta$) zu dem Verzerrungswinkel ($\gamma$) in einem festen Verhältnis steht.

**2.** Verfahren nach Anspruch 1, dadurch gekennzeichnet, daß der Verzerrungswinkel ($\gamma$) unter Verwendung elektronischer Rechentechnik aus den Ausgangsdaten der Bildvorlage ($B_H$, $B_B$), des Aufstellwinkels der Projektionseinrichtung bzw. des Bildneigungswinkels ($\beta$), der Brennweite ($f$) des Objektivs (7), der Strahllänge ($D$) über die iterative Bestimmung eines Winkels $\varepsilon$, der die Strahlöffnung der verwendeten Abbildungsoptik (7) beschreibt, nach der Beziehung

$$\frac{\text{Strahllänge } D}{\text{Bildhöhe } B_H} = \cos \varepsilon/2 \, (\sin \alpha \cot \varepsilon - \cos \alpha)$$

zur Bestimmung der Bildhöhe ($B_{HD}$), der verkürzten Bildbreite ($vB_B$), der Mittelpunktexzentrizität ($E$), des Verzerrungswinkels ($\gamma$) des zu projizierenden Bildes (1) ermittelt wird.

**3.** Verfahren nach den Ansprüchen 1 und 2, dadurch gekennzeichnet, daß zwischen der Projektionseinrichtung (3) und der Bildwand (2,2') mindestens ein Spiegel (5) so angeordnet wird, daß der Strahlengang Hindernisse umgeht.

**4.** Verfahren nach den Ansprüchen 1 und 2, dadurch gekennzeichnet, daß das zu projizierende Bild (1) in seinem Dichteverlauf so verändert wird, daß der durch die Schrägprojektion entstehende Lichtabfall kompensiert wird.

**5.** Anordnung zur unverzerrten Projektion von Bildern mittels einer Projektionseinrichtung auf eine Bildwand, wobei Bildwand und/oder Projektionseinrichtung schräg zueinander angeordnet sind, dadurch gekennzeichnet, daß die Projektionseinrichtung (3) mit der Beleuchtungseinrichtung (6) zur Bildwand (2,2') unter einem Bildneigungswinkel ($\alpha$) zur optischen Achse (OA) geneigt angeordnet ist und das zu projizierende Bild (1) so vorverzerrt ist, daß der Bildneigungswinkel ($\beta$) und der Bildwandneigungswinkel ($\alpha$) in einem festen Verhältnis zum Verzerrungswinkel ($\gamma$) des zu projizierenden Bildes (4) stehen.

**6.** Anordnung nach Anspruch 5, dadurch gekennzeichnet, daß zwischen der Projektionseinrichtung (3) und der Bildwand (2,2') mindestens ein Spiegel (5) angeordnet ist.

**Fig. 1**

EP 1 065 560 A1

Fig. 2

EP 1 065 560 A1

Fig.3

# Fig. 4

Europäisches
Patentamt

**EUROPÄISCHER RECHERCHENBERICHT**

Nummer der Anmeldung

EP 00 25 0176

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 01196 A A.D. 1904 (THEODOR SCHEIMPFLUG) 12. Mai 1904 (1904-05-12) | 1,2,5,6 | G03B21/13 G03B21/14 G03B21/28 |
| Y | * Seite 18, Zeile 55 - Seite 23, Zeile 19; Abbildungen 1-16 * | 3,4 | |
| X | & THEODOR SCHEIMPFLUG: "GB1196/1904 Patent specification: Improved Method and apparatus for the systematic alteration or distrortion of plane pictures and images by means of lenses and mirrors for Photography and for other purposes" 'Online! 12. Mai 1904 (1904-05-12) , HAROLD M. MERKLINGER , INTERNET Gefunden im Internet: <URL: http://fox.nstn.ca/~hmmerk/TSBP.pdf> 'gefunden am 2000-10-17! | 1,2,5,6 | |
| Y | * Seite 18, Zeile -3 - Seite 23, Absatz 6.; Abbildungen 1-16 * | 3,4 | |
| | --- | | |
| X | US 5 302 983 A (SATO MAKOTO ET AL) 12. April 1994 (1994-04-12) | 1,3,5,6 | RECHERCHIERTE SACHGEBIETE (Int.Cl.7) |
| Y | * Spalte 6, Zeile 46 - Spalte 12, Zeile 40; Abbildungen 1-3,5,9 * | 3 | G03B H04N |
| | --- | | |
| Y | DE 197 37 861 C (LDT GMBH & CO) 4. März 1999 (1999-03-04) * Spalte 6, Zeile 67 - Spalte 10, Zeile 65; Abbildungen 1-9 * | 3 | |
| | --- | | |
| Y | US 4 455 067 A (HOPPMANN KURT H ET AL) 19. Juni 1984 (1984-06-19) * das ganze Dokument * | 4 | |
| | --- | | |

-/--

Der vorliegende Recherchenbericht wurde für alle Patentansprüche erstellt

| Recherchenort | Abschlußdatum der Recherche | Prüfer |
|---|---|---|
| MÜNCHEN | 31. Oktober 2000 | Bähr, A |

EPO FORM 1503 03.82 (P04C03)

**Europäisches Patentamt**

**EUROPÄISCHER RECHERCHENBERICHT**

Nummer der Anmeldung

EP 00 25 0176

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 197 37 374 A (LDT GMBH & CO) 4. März 1999 (1999-03-04) * Seite 7, Zeile 38 - Seite 11, Zeile 32; Abbildungen 1-8,11-14 * * Seite 18, Zeile 17 - Seite 19, Zeile 20; Abbildungen 21-23 * | 1-3,5,6 | |
| X | US 4 422 153 A (ARAI YOSHIO ET AL) 20. Dezember 1983 (1983-12-20) * Spalte 2, Zeile 25 - Spalte 6, Zeile 10; Abbildungen 1-8 * | 1-3 | |
| X | US 5 664 858 A (WOO SEONG-JAE) 9. September 1997 (1997-09-09) * Spalte 8, Zeile 18 - Spalte 10, Zeile 67; Abbildungen 1-6,11,12 * | 1,2,5 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| MÜNCHEN | 31. Oktober 2000 | Bähr, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

## ANHANG ZUM EUROPÄISCHEN RECHERCHENBERICHT
## ÜBER DIE EUROPÄISCHE PATENTANMELDUNG NR.

EP 00 25 0176

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2000

| Im Recherchenbericht angeführtes Patentdokument | Datum der Veröffentlichung | Mitglied(er) der Patentfamilie | | Datum der Veröffentlichung |
|---|---|---|---|---|
| GB D01196 A | | KEINE | | |
| US 5302983 A | 12-04-1994 | JP | 2079037 A | 19-03-1990 |
| | | JP | 2906348 B | 21-06-1999 |
| | | JP | 2103450 A | 16-04-1990 |
| | | JP | 2647457 B | 27-08-1997 |
| | | US | 5220363 A | 15-06-1993 |
| | | US | 5032022 A | 16-07-1991 |
| DE 19737861 C | 04-03-1999 | EP | 0899966 A | 03-03-1999 |
| | | JP | 11174585 A | 02-07-1999 |
| US 4455067 A | 19-06-1984 | CA | 1145181 A | 26-04-1983 |
| DE 19737374 A | 04-03-1999 | AU | 9346998 A | 16-03-1999 |
| | | BR | 9806194 A | 16-11-1999 |
| | | WO | 9911062 A | 04-03-1999 |
| | | EP | 0934653 A | 11-08-1999 |
| | | JP | 2000509522 T | 25-07-2000 |
| | | ZA | 9807765 A | 01-03-1999 |
| US 4422153 A | 20-12-1983 | JP | 1386760 C | 14-07-1987 |
| | | JP | 56042225 A | 20-04-1981 |
| | | JP | 61054216 B | 21-11-1986 |
| US 5664858 A | 09-09-1997 | KR | 173704 B | 20-03-1999 |
| | | AU | 706332 B | 17-06-1999 |
| | | AU | 6532596 A | 26-02-1997 |
| | | BR | 9606541 A | 28-07-1998 |
| | | CA | 2200863 A | 13-02-1997 |
| | | CN | 1169228 A | 31-12-1997 |
| | | CZ | 9700836 A | 16-07-1997 |
| | | EP | 0756425 A | 29-01-1997 |
| | | HU | 9801147 A | 28-08-1998 |
| | | JP | 10507332 T | 14-07-1998 |
| | | WO | 9704634 A | 13-02-1997 |
| | | PL | 319435 A | 04-08-1997 |

EPO FORM P0461

Für nähere Einzelheiten zu diesem Anhang : siehe Amtsblatt des Europäischen Patentamts, Nr.12/82